# EUROPEAN PATENT SPECIFICATION

(11) **EP 4 487 670 B1**
(45) Date of publication and mention of the grant of the patent: **17.06.2026**
(21) Application number: 24175415.9
(22) Date of filing: 13.05.2024
(51) Int. Cl.: A01D 34/00, A01D 34/42, A01D 34/66, A01D 34/84, A01D 43/16, A01D 34/43, A01D 34/535

(54) **A ROBOTIC LAWN MOWER WITH ENHANCED CUTTING PROPERTIES**
ROBOTISCHER RASENMÄHER MIT VERBESSERTEN SCHNEIDEIGENSCHAFTEN
TONDEUSE À GAZON ROBOTIQUE AYANT DES PROPRIÉTÉS DE COUPE AMÉLIORÉES

(30) Priority: 05.07.2023 SE 2350849
(43) Date of publication of application: 08.01.2025
(73) Proprietor: Husqvarna AB, 561 82 Huskvarna (SE)
(72) Inventor: Fungbrandt, Niklas, Huskvarna (SE)

(56) References cited:
- WO-A1-2022/203561
- CN-A- 112 840 828
- US-A1- 2021 302 970

## Description

### TECHNICAL FIELD

The present disclosure relates to a robotic lawn mower that is adapted to operate within a certain operation area. The robotic lawn mower comprises a body, at least two drive wheels, at least one swivelable wheel, a control unit adapted to control the operation of the robotic lawn mower and a first rotatable grass cutting disc having a first rotation axis and a first rotation plane.

### BACKGROUND

Robotic lawn mowers are becoming increasingly more popular. A robotic lawn mower is usually battery-powered by means of a rechargeable battery and is adapted to cut grass on a user's lawn automatically. The robotic lawn mower can be charged automatically without intervention of the user, and does not need to be manually managed after being set once.

In a typical deployment a work area, such as a garden, park, sports field, golf court and the like, the work area is enclosed by a boundary wire with the purpose of keeping the robotic lawn mower inside the work area. An electric control signal may be transmitted through the boundary wire thereby generating an (electro-) magnetic field emanating from the boundary wire. The robotic working tool is typically arranged with one or more sensors adapted to sense the control signal.

Alternatively, or as a supplement, the robotic lawn mower can be equipped with a navigation system that is adapted for satellite navigation by means of GPS (Global Positioning System) or some other Global Navigation Satellite System (GNSS) system, for example using Real Time Kinematic (RTK).

A problem associated with robotic lawn mowers is that they normally have a limited ability to cut grass close to objects and borders. That is, normally, the cutting unit is arranged at an underside of a lawn mower body of the robotic lawn mower and portions of the lawn mower body, and/or wheels attached thereto, may hinder the cutting unit from reaching grass close to objects and borders. If so, the cutting result is impaired because there will be uncut grass close to object such as trees, stones, furniture, building walls, and the like.

Another problem associated with robotic lawn mowers is a limited ability to cut relatively long grass, robotic lawn mowers having a limited ground clearance height due to safety reasons.

The document WO 2022/203561 A1 discloses a self-propelled robotic lawnmower that comprises a first cutting unit, a second cutting unit, and a control arrangement. The control arrangement is configured to control operation of the first and second cutting units based on whether the robotic lawnmower is propelled in a forward moving direction or in a reverse moving direction.

It is therefore desired to provide means and a method for cutting grass close to objects and borders, and to cut relatively long grass.

### SUMMARY

The object of the present disclosure is to provide means and a method for cutting grass close to objects and borders, and to cut relatively long grass.

This object is achieved by means of a robotic lawn mower comprising a first end portion facing a forward travelling direction F and a second end portion facing a reverse travelling direction R. The robotic lawn mower further comprises a body, at least two drive wheels, at least one swivelable wheel, a control unit adapted to control the operation of the robotic lawn mower, and a first rotatable grass cutting device having a first rotation axis and a first rotation plane. The wheels are at least partly adapted to run on a ground surface and at least two drive wheels have a drive wheel axis with a center and are drivably connected to a propulsion motor arrangement.

The robotic lawn mower comprises a longitudinal extension that extends along a straight travelling direction for the robotic lawn mower. The robotic lawn mower further comprises a second rotatable grass cutting device having a second rotation axis and a second rotation plane that presents a smallest first angle to the longitudinal extension that exceeds 45°.

In this way, second rotatable grass cutting device can reach relatively close to a boundary. The second rotatable grass cutting device requires relatively little space, creating more flexibility for the supporting swivelable wheels. Furthermore, a protection from getting into contact with cutting knives or cutting edges comprised in the second rotatable grass cutting device can be formed in a compact and uncomplicated manner.

According to some aspects, the second rotation axis extends at a smallest second angle to the longitudinal extension that falls below 45°. This means that the second rotation axis can vary relative to the longitudinal extension.

According to some aspects, the robotic lawn mower comprises a first mower motor that is adapted to propel the first rotatable grass cutting device and a second mower motor that is adapted to propel the second rotatable grass cutting device.

This means that the first rotatable grass cutting device and the second rotatable grass cutting device can be run independently of each other. For example, one grass cutting device can be turned off when not used to save energy.

According to some aspects, the second rotatable grass cutting device comprises a plurality of holding arms extending along the second rotation plane from the second rotation axis to a respective end where a respective cutting knife is attached. This provides an easily replaceable lightweight part.

According to some aspects, the holding arms and the cutting knives are formed as one integral part. This means that the holding arms and the cutting knives can be manufactured in a cost-effective manner, and can easily be disposed when used in an environment-friendly manner.

According to some aspects, the second rotatable grass cutting device comprises a second cutting disk having a periphery at which at least two cutting knives are attached. This means that an ordinary, already existing, cutting disc can be used.

According to some aspects, the cutting knives are formed as releasable and exchangeable parts. In this way, the cutting knives can be manufactured in a cost-effective manner, and can easily be disposed when used in an environment-friendly manner.

According to some aspects, the cutting knives are formed in a plastic material, each cutting knife having a keyhole-shaped aperture. The holding arms or the second cutting disk comprises at least two holding rods with an outer wider portion. Each holding rod is adapted to receive a corresponding keyhole-shaped aperture.

According to some aspects, the cutting knives are formed in a plastic material, each cutting knife having a wider part and where the holding arms or the second cutting disk comprises at least two holding frames with corresponding apertures. Each holding frame is adapted to receive and hold a corresponding cutting knife where a largest width of the wider part exceeds a largest width of the aperture.

This provides easily replaceable cutting knives where previously well-known and proven fastening techniques can be applied.

According to some aspects, the second rotatable grass cutting device is positioned closer to the second end portion than the first end portion and faces the second end portion. The smallest first angle falls below 90° such that when a cutting knife during rotation of the second rotatable grass cutting device comes closest to the ground surface, that cutting knife also comes closer to the second end portion than any other cutting knife. This means that the performance for the edge cutting is optimized to be closer to the outer cover of the robotic lawn mower, i.e., closer to the second end portion.

According to some aspects, the robotic lawn mower comprises a safety arrangement that in turn comprises a plurality of protective wall parts extending mainly perpendicular to the longitudinal extension and being mutually separated by gaps along the longitudinal extension, the safety arrangement being positioned between the second rotatable grass cutting device and the ground surface such that when a cutting knife during rotation of the second rotatable grass cutting device comes closest to a ground surface, the safety arrangement is positioned between that cutting knife and the ground surface.

The second rotatable grass cutting device enables a safety arrangement to be manufactured in a low-cost manner and in such a way that the risk of cut grass and other debris get stuck in the safety arrangement is lowered.

According to some aspects, the protective wall parts at least mainly have an arcuate shape with a common center. According to some further aspects, the common center is the center of the drive wheel axis. In this way, when the arcuate movement is performed, the grass will not be bent when moving between the protective walls.

According to some aspects, the control unit is adapted to control the robotic lawn mower to move towards a boundary such that the first end portion approaches the boundary, and to determine if a distance to the boundary fulfills a condition. When the control unit determines that a distance to the boundary fulfills a condition, the control unit is adapted to stop the robotic lawn mower and to control the drive wheels to turn in mutually different directions such that the second end portion of the robotic lawn mower performs an arcuate movement along a cutting arc, enabling the second rotatable grass cutting device to cut grass within the cutting arc. In this way, it is possible to cut grass relatively close to a boundary, enabling edge cutting.

According to some aspects, the center of the cutting arc is positioned along the drive wheel axis. According to some further aspects, the center of the cutting arc is positioned in the center of the drive wheel axis. This means that the arcuate movement can easily be performed by turning the drive wheels in mutually different directions.

According to some aspects, the boundary is in the form of a boundary wire defining an operation area for the robotic lawn mower, where the control unit is adapted to stop the robotic lawn mower when the robotic lawn mower is positioned on the boundary wire. The condition relates to a determined distance between the boundary wire and the robotic lawn mower falling below a first threshold.

According to some aspects, the boundary is in the form of an object, where the cutting arc has a closest arc portion that is closest to the object. The condition relates to a determined distance between the object and the robotic lawn mower falling below a second threshold.

This means that the boundary can be in many forms, while cutting the grass relatively close to the boundary still is enabled.

According to some aspects, the condition relates to the robotic lawn mower coming into contact with the object.

According to some aspects, the cutting arc has an angular extension that exceeds 180º, where the control unit is adapted to control the robotic lawn mower to continue moving when a second end center that has followed the extension of the cutting arc has reached an end of the cutting arc.

This means that the robotic lawn mower will continue moving at an angle to the original angle of approach, away from the boundary. This in turn enables the robotic lawn mower to repeat the above procedure, performing arcuate movements, such that a continuous grass edge close to the boundary is cut.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present disclosure will become apparent when studying the appended claims and the following description. The skilled person realizes that different features of the present disclosure may be combined to create embodiments other than those described in the following, without departing from the scope of the present disclosure.

### BRIEF DESCRIPTION OF THE DRAWINGS

The present disclosure will now be described more in detail with reference to the appended drawings, where:
- Figure 1: shows a top view of a robotic lawn mower;
- Figure 2: shows a bottom view of the robotic lawn mower without safety arrangement;
- Figure 3: shows a bottom view of the robotic lawn mower with safety arrangement;
- Figure 4: shows a rear partial look-through view of the robotic lawn mower with a first type second rotatable grass cutting device;
- Figure 5: shows a side view of the robotic lawn mower;
- Figure 6: shows a schematic side view of a second rotatable grass cutting device according to a first example;
- Figure 7: shows a schematic side view of a second rotatable grass cutting device according to a second example;
- Figure 8: shows a schematic view of a movement pattern of the robotic lawn mower;
- Figure 9: shows a rear partial look-through view of the robotic lawn mower with a second type second rotatable grass cutting device;
- Figure 10: shows an enlarged perspective view of a swivelable wheel:
- Figure 11: shows a side view of the first type second rotatable grass cutting device with replaceable knives;
- Figure 12: shows a front view of Figure 11;
- Figure 13: shows a side view of the second type second rotatable grass cutting device with replaceable knives; and
- Figure 14: shows a front view of Figure 13.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the present disclosure. As used herein, the singular forms "a", "an" and "the" are intended to include the plural forms as well, unless the context clearly indicates otherwise.

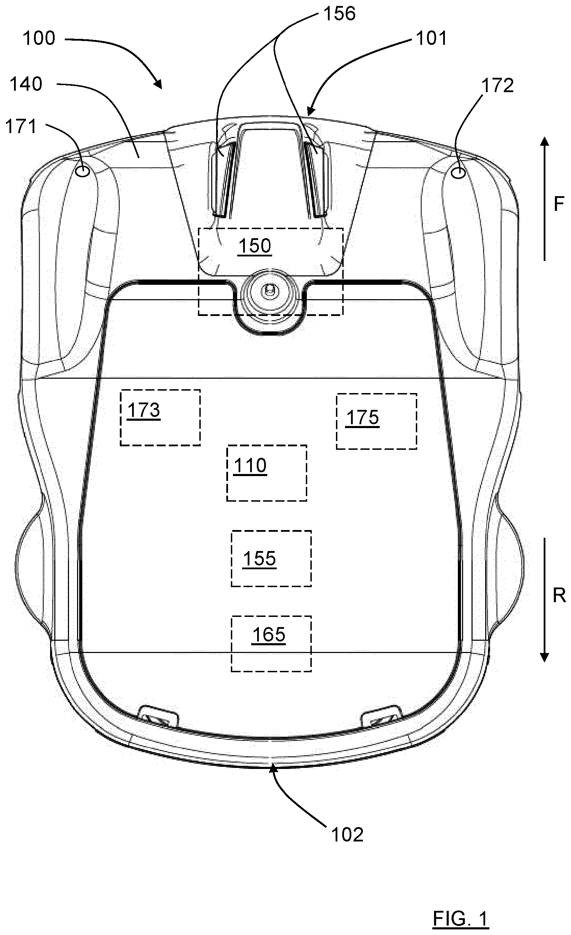

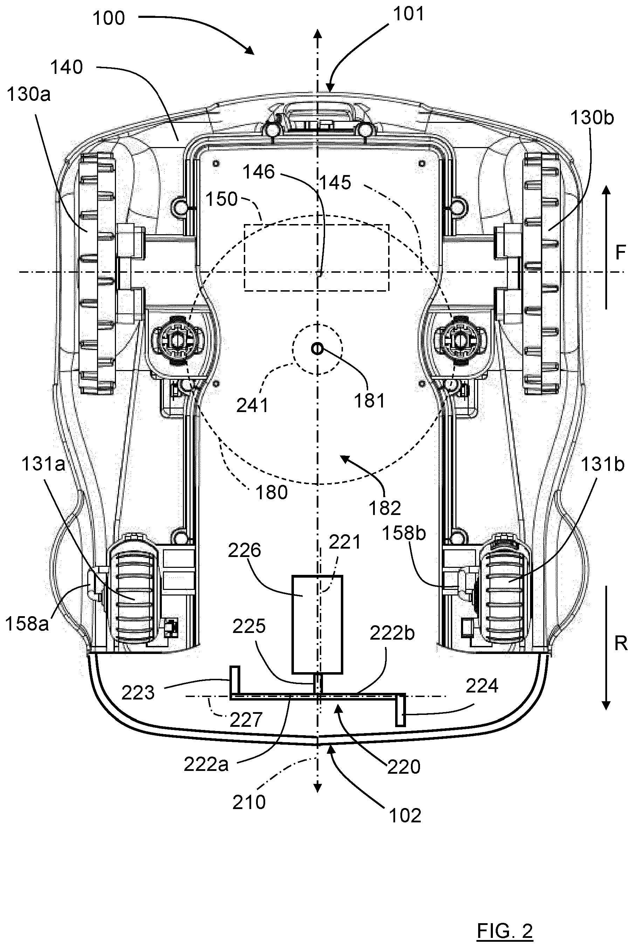

Figure 1 shows a top view of a robotic lawn mower 100 and Figure 2 shows a bottom view of the robotic lawn mower 100. The robotic lawn mower 100 has a first end portion 101 and a second end portion 102, is adapted for a forward travelling direction F and a reverse travelling direction R. The first end portion 101 is facing the forward travelling direction F and the second end portion 102 is facing the reverse travelling direction R. The robotic lawn mower 100 comprises a body 140, at least two drive wheels 130a, 130b, at least one swivelable wheel 131a, 131b, a control unit 110 adapted to control the operation of the robotic lawn mower 100, a first rotatable grass cutting device 180 having a first rotation axis 181 and a first rotation plane 182.

The wheels 130a, 130b; 131a, 131b are at least partly adapted to run on a ground surface G, and at least two drive wheels 130a, 130b have a drive wheel axis 145 with a center 146 and are drivably connected to a propulsion motor arrangement 150 that suitably but not necessarily is electrically powered.

According to some aspects, the propulsion motor arrangement 150 is adapted to drive the drive wheels 130a, 130b in the same rotation direction, or in different rotation directions, and at different rotational speeds. According to some aspects, the propulsion motor arrangement 150 comprises two separate electrical motors, and according to some further aspects each such electric motor is mounted to a corresponding drive wheel 130a, 130b, for example in a corresponding drive wheel hub.

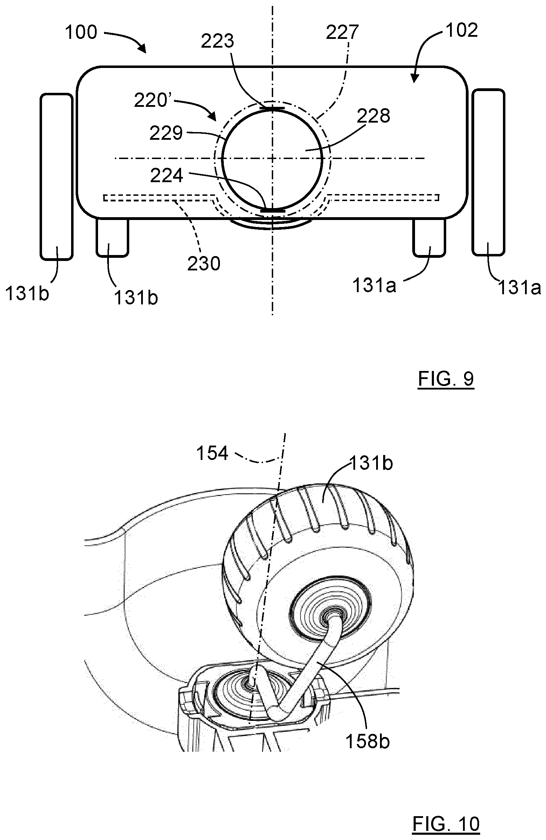

According to some aspects, as illustrated in this example, the robotic lawn mower 100 comprises four wheels, two larger drive wheels 130a, 130b and two smaller swivelable wheels 131a, 131b that are in form of castor wheels and are arranged to swivel around a corresponding swivel axis 154, as indicated for one swivelable wheel 131b in Figure 10, when the robotic lawn mower 100 is turning. For this purpose, the swivelable wheels 131a, 131b are connected to the body 140 by means of corresponding swivel wheel holders 158a, 158b as shown in Figure 2, Figure 3 and Figure 10, where, according to some aspects, it is the swivel wheel holders 158a, 158b that swivel in relation to the body and are fixed in relation to the swivelable wheels 131a, 131b. The opposite is of course conceivable.

The robotic lawn mower 100 may be a multi-chassis type or a mono-chassis type. A multi-chassis type comprises more than one body parts that are movable with respect to one another. A mono-chassis type comprises only one main body part. In this example embodiment, the robotic lawn mower 100 is of a mono-chassis type, having a main body part 140. The main body part 140 substantially houses all components of the robotic lawn mower 100.

According to some aspects, the robotic lawn mower 100 may further comprise at least one navigation sensor arrangement 175 and/or at least one wire sensor 173 (only schematically indicated in Figure 1). In one embodiment, the navigation sensor arrangement 175 comprises one or more sensors for deduced navigation. Examples of sensors for deduced reckoning are odometers, accelerometers, gyroscopes, and compasses to mention a few examples. The navigation sensor arrangement 175 may comprise a satellite navigation sensor such as a GPS (Global Positioning System) device or other Global Navigation Satellite System (GNSS) device, according to some aspects for example using Real Time Kinematic (RTK).

Such a wire sensor 173 is adapted to sense a boundary wire control signal and/or at least one environment detection device 171, 172 adapted to detect objects. In this example, radar transceivers 171, 172 are provided and adapted to transmit signals and to receive reflected signals that have been reflected by an object. Other environment detection devices such as camera devices, ultrasonic devices and Lidar devices are of curse also conceivable, as alternatives or in any suitable combination.

The control unit 110 is adapted to control the environment detection device 171, 172 and to control the speed and direction of the robotic lawn mower 100 in dependence of information acquired by means of the of the environment detection devices 171, 172 and/or said wire sensor 173 when the robotic lawn mower 100 is moving.

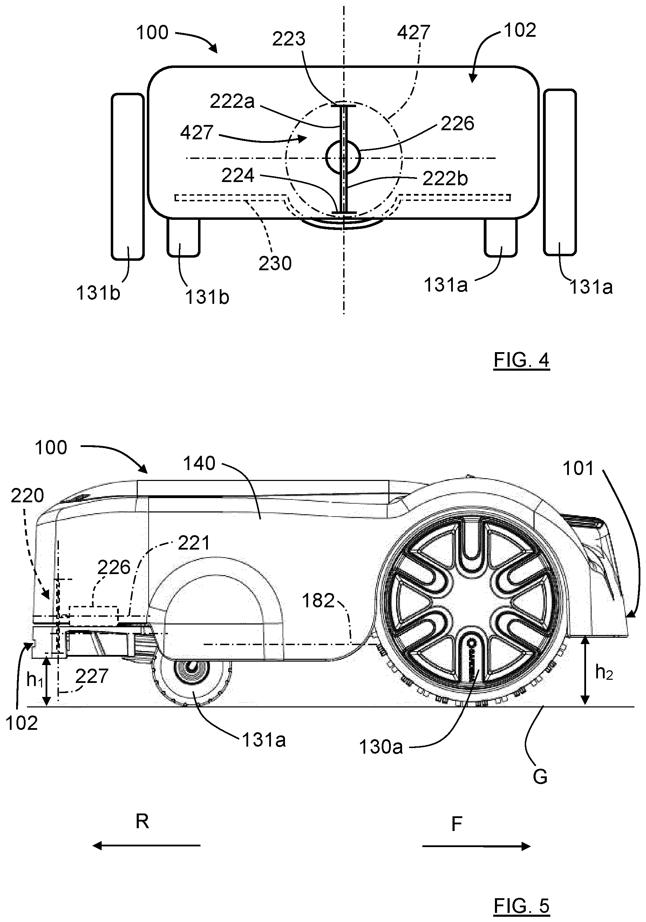

The robotic lawn mower 100 comprises a longitudinal extension 210 that extends along a straight travelling direction F, R for the robotic lawn mower 100, the forward or reverse travelling direction. According to the present disclosure, with reference also to Figure 4, Figure 5 and Figure 6 that show a rear partial look-through view of the robotic lawn mower, a side view of the robotic lawn mower, and a schematic side view of a second rotatable grass cutting device, the robotic lawn mower 100 comprises a second rotatable grass cutting device 220 having a second rotation axis 221 and a second rotation plane 227 that presents a smallest first angle α to the longitudinal extension 210 that exceeds 45°. Suitably the longitudinal extension 210 extends centrally in the robotic lawn mower 100, and the longitudinal extension 210 may according to some aspects coincide with the second rotation axis 221. According to some aspects, the longitudinal extension 210 extends parallel to a flat ground surface G.

In this context it should be understood that the first angle α is a smallest angle that is formed between the second rotation plane 227 and the longitudinal extension 210, such that the first angle α can be formed on both sides of the second rotation plane 227.

This means that the second rotation plane 227 forms an angle, the first angle α, in the span 45°-90° to the longitudinal extension 210 of the robotic lawn mower 100. In this way, second rotatable grass cutting device 220 can reach relatively close to a boundary. An example of edge cutting using the second rotatable grass cutting device 220 will be described later.

The second rotatable grass cutting device 220 requires relatively little space, creating more flexibility for the supporting swivelable wheels 131a, 131b. Furthermore, a protection from getting into contact with cutting knives or cutting edges comprised in the second rotatable grass cutting device 220 can be formed in a compact and uncomplicated manner. An example of such a protection will be described later.

According to some aspects, the second rotation axis 221 extends at a smallest second angle β to the longitudinal extension 210 that falls below 45°. This means that the second rotation axis 221 can vary relative to the longitudinal extension 210.

According to some aspects, the robotic lawn mower 100 comprises a first mower motor 241 that is adapted to propel the first rotatable grass cutting device 180 and a second mower motor 226 that is adapted to propel the second rotatable grass cutting device 220. Suitably but not necessarily the mower motors 226, 241 are electrically powered. This means that the first rotatable grass cutting device 180 and the second rotatable grass cutting device 220 can be run independently of each other. For example, one grass cutting device can be turned off when not used to save energy.

According to some aspects, the robotic lawn mower 100 also comprises at least one rechargeable electric power source such as a battery 155 (only schematically indicated in Figure 1) for providing power to the motors 150, 226, 241. The battery 155 is arranged to be charged by means of received charging current from a charging station, received through charging skids 156 or other suitable charging connectors. Inductive charging without galvanic contact, only by means of electric contact, is also conceivable. The battery is generally constituted by a rechargeable electric power source 155 that comprises one or more batteries that can be separately arranged or be arranged in an integrated manner to form a combined battery.

According to some aspects, as shown in Figure 4, the second rotatable grass cutting device 220 comprises a plurality of holding arms 222a, 222b extending along the second rotation plane 227 from the second rotation axis 221 to a respective end where a respective cutting knife 223, 224 is attached. This is a first type second rotatable grass cutting device 220, in this example there are two holding arms 222a, 222b with respective cutting knives 223, 224. This provides an easily replaceable lightweight part.

According to some aspects, the holding arms 222a, 222b and the cutting knives 223, 224 are formed as one integral part. This means that the holding arms 222a, 222b and the cutting knives 223, 224 can be manufactured in a cost-effective manner, and can easily be disposed when used in an environment-friendly manner. The holding arms 222a, 222b and the cutting knives 223, 224 can for example be cast or moulded in metal or in a plastic material.

According to some aspects, as shown in Figure 9, the second rotatable grass cutting device 220' comprises a second cutting disk 228 having a periphery 229 at which at least two cutting knives 223, 224 are attached. This is a second type second rotatable grass cutting device 220', in this example there are two cutting knives 223, 224.This means that an ordinary, already existing, cutting disc can be used.

According to some aspects, for any type of second rotatable grass cutting device 220, 220', the cutting knives 223, 224 are formed as releasable and exchangeable parts. In this way, the cutting knives 223, 224 can be manufactured in a cost-effective manner, and can easily be disposed when used in an environment-friendly manner. The cutting knives 223, 224 can for example be formed in metal or in a plastic material. Ceramic materials are also conceivable.

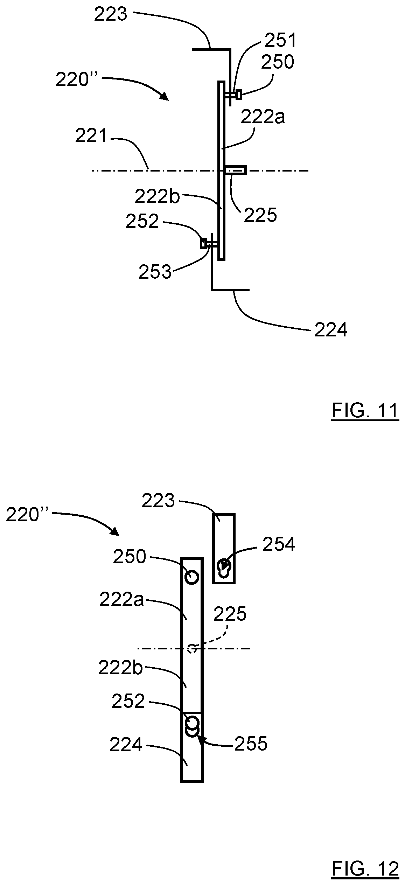

According to some aspects, as shown in Figure 11 and Figure 12, the cutting knives 223, 224 are formed in a plastic material, each cutting knife 223, 224 having a keyhole-shaped aperture 254, 255. The holding arms 222a, 222b or the second cutting disk 228 comprises at least two holding rods 251, 253 with an outer wider portion 250, 252, each holding rod 251, 253 being adapted to receive a corresponding keyhole-shaped aperture 254, 255.

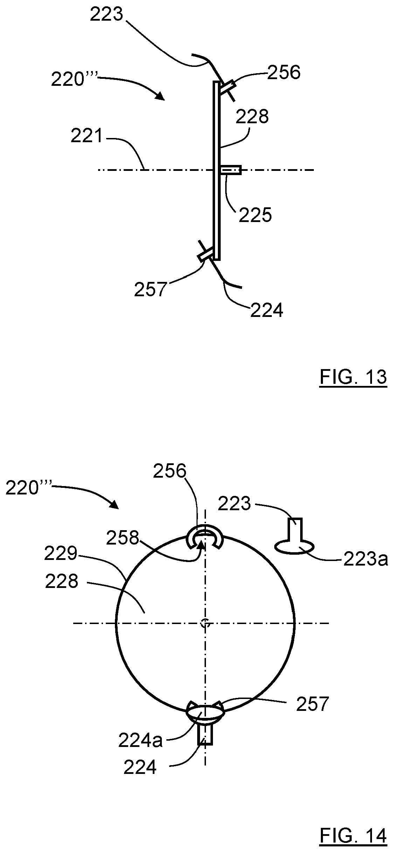

According to some aspects, as shown in Figure 13 and Figure 14, the cutting knives 223, 224 are formed in a plastic material, each cutting knife 223, 224 having a wider part 223a, 224a. The holding arms 222a, 222b or the second cutting disk 228 comprises at least two holding frames 256, 257 with corresponding apertures 258, each holding frame 256, 257 being adapted to receive and hold a corresponding cutting knife 223, 224 where a largest width of the wider part 223a, 224a exceeds a largest width of the aperture 258.

The above example described with reference to Figure 11 - Figure 14 are thus applicable for both types of second rotatable grass cutting device 220, 220' although only illustrated for the first types of second rotatable grass cutting device 220 with two or more holding arms. These examples illustrate easily replaceable cutting knives where previously well-known and proven fastening techniques can be applied.

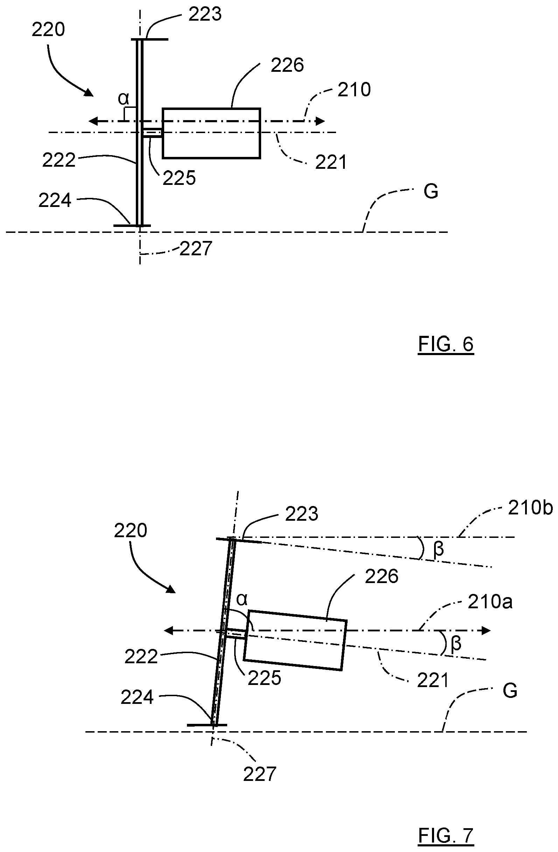

According to some aspects, as illustrated for the first type second rotatable grass cutting device 220 in Figure 7, the second rotatable grass cutting device 220 is positioned closer to the second end portion 102 than the first end portion 101 and faces the second end portion 102. The smallest first angle α falls below 90° such that when a cutting knife 224 during rotation of the second rotatable grass cutting device 220 comes closest to the ground surface G, that cutting knife 224 also comes closer to the second end portion 102 than any other cutting knife 223. In other words, the cutting knife 224 that is in the lowest position is also the cutting knife that is closest to the second end portion 102.

Here, the rotation axis 221 is shown to present a smallest second angle β to the longitudinal extension 210 that exceeds zero such that the rotation axis 221 is tilted when the second rotation plane 227 is tilted. This is not necessary, the rotation axis 221 does not need to be tilted in the same way as the second rotation plane 227, or tilted at all.

This means that the performance for the edge cutting is optimized to be closer to the outer cover of the robotic lawn mower 100, i.e., closer to the second end portion 102. This configuration is of course also possible for other types of second rotatable grass cutting devices, such as the second type second rotatable grass cutting device 220'.

According to some aspects, associated cutting edges of the cutting knives are directed perpendicular to the second rotation plane 227. According to some aspects, for all examples, at this lowest position of a cutting knife 223, the associated cutting edge runs parallel to the ground plane G.

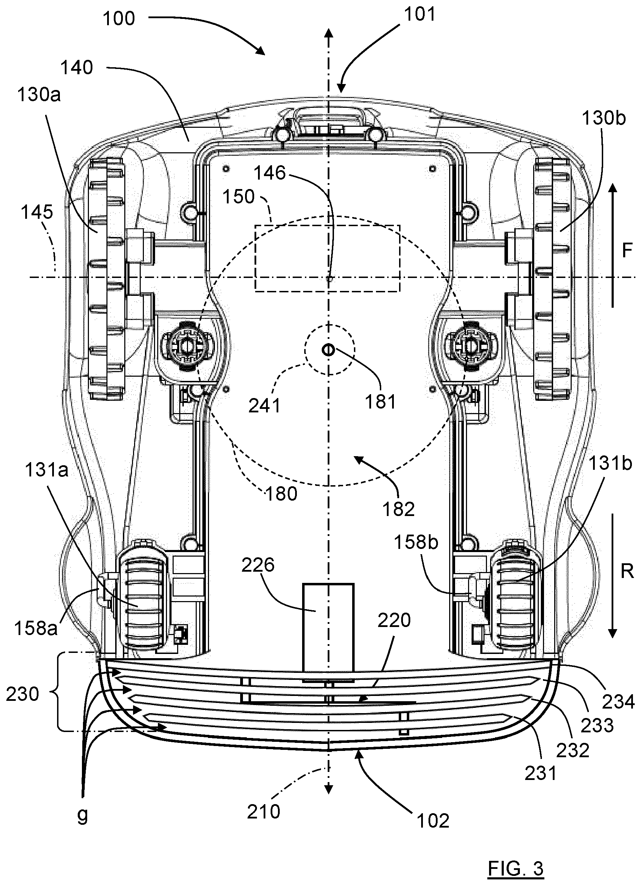

According to some aspects, as shown in Figure 3 and Figure 4, the robotic lawn mower 100 comprises a safety arrangement 230 that in turn comprises a plurality of protective wall parts 231, 232, 233, 234 extending mainly perpendicular to the longitudinal extension 210 and being mutually separated by gaps g along the longitudinal extension 210. Figure 2 shows a bottom view of the robotic lawn mower without the safety arrangement 230 and Figure 3 shows a bottom view of the robotic lawn mower with the safety arrangement 230.

The safety arrangement 230 is positioned between the second rotatable grass cutting device 220 and the ground surface G such that when a cutting knife 224 during rotation of the second rotatable grass cutting device 220 comes closest to a ground surface G, the safety arrangement 230 is positioned between that cutting knife 224 and the ground surface G.

By means of the present disclosure, the safety arrangement 230 can be manufactured in a low-cost manner and in such a way that the risk of cut grass and other debris get stuck in the safety arrangement 230 is lowered.

The protective wall parts 231, 232, 233, 234 confer an injury protection for humans and animals that come close to the second end portion during normal running, in particular during edge cutting when the second rotatable grass cutting device 220 is active. The second rotatable grass cutting device 220 is at least active during edge cutting and may be turned off otherwise to save energy. In this context, edge cutting refers to cutting grass relatively close to a boundary, where the second rotatable grass cutting device 220 has a relatively narrow but efficient cutting width that is particularly suited. An example of edge cutting will be described below.

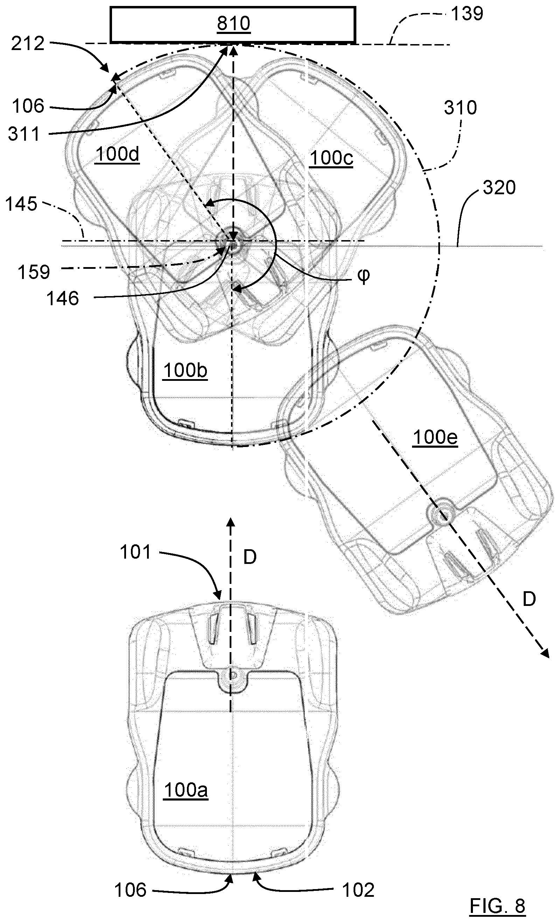

According to some aspects, as illustrated in Figure 8, the control unit 110 is adapted to control the robotic lawn mower 100a to move towards a boundary 810, 320 such that the first end portion 101 approaches the boundary 810, 320 and to determine if a distance to the boundary 810, 320 fulfills a condition. When the control unit 110 determines that a distance to the boundary 810, 320 fulfills a condition, the control unit 110 is adapted to stop the robotic lawn mower 100b, and to control the drive wheels 130a, 130b to turn in mutually different directions such that the second end portion 102 of the robotic lawn mower 100c, 100d performs an arcuate movement along a cutting arc 310, enabling the second rotatable grass cutting device 220 to cut grass within the cutting arc 310.

In this way, it is possible to cut grass relatively close to a boundary, enabling edge cutting.

According to some aspects, the center 159 of the cutting arc 310 is positioned along the drive wheel axis 145. According to some further aspects, the center 159 of the cutting arc 310 is positioned in the center 146 of the drive wheel axis 145.

This means that the arcuate movement can easily be performed by turning the drive wheels in mutually different directions. This is the case when the drive wheels 130a, 130b are driven in different rotation directions and at the same rotation velocities by the propulsion motor arrangement 150. Of course, this should not be interpreted literally, since small deviations can occur due to motor inaccuracies, uneven ground, uneven ground contact and uneven ground friction. The velocities being the same and the center 159 of the cutting arc 210 being positioned in the center 146 of the drive wheel axis 145 should be interpreted according to what is intended and practically achievable, not to be mathematically exact.

According to some aspects, the protective wall parts 231, 232, 233, 234 at least mainly have an arcuate shape with a common center 146. According to some further aspects, the common center 146 is the center of the drive wheel axis 145.

In this way, when the arcuate movement is performed, the grass will not be bent when moving between the protective walls.

According to some aspects, at least one protective wall part 231, 232, 233, 234 comprises tapered end portions that enable the grass to be easily divided between the protective walls wall parts 231, 232, 233, 234 when the arcuate movement is performed.

According to some aspects, as illustrated in Figure 4, the protective walls wall parts 231, 232, 233, 234 partly follow a rotational circumference 427 of the second rotatable grass cutting device 220. This means that the protective walls wall parts 231, 232, 233, 234 runs relatively close to the second rotatable grass cutting device 220.

According to some aspects, the boundary is in the form of a boundary wire 320 defining an operation area for the robotic lawn mower 100. The control unit 110 is adapted to stop the robotic lawn mower 100 when the robotic lawn mower 100 is positioned on the boundary wire 320, where the condition relates to a determined distance between the boundary wire 320 and the robotic lawn mower 100 falling below a first threshold.

According to some aspects, the boundary is in the form of an object 810, where the cutting arc has a closest arc portion 311 that is closest to the object 810. The condition relates to a determined distance between the object 810 and the robotic lawn mower 100 falling below a second threshold.

Obviously, the boundary can be in many forms, while cutting the grass relatively close to the boundary still is enabled.

According to some aspects, the condition relates to the robotic lawn mower 100 coming into contact with the object 810 which for example can be detected by a collision sensor and/or a radar transceiver and/or a camera device.

It is to be understood that Figure 8 illustrates both the case where the boundary is in the form of a boundary wire 320, and the case where the boundary is in the form of an object 810. The boundary can thus be in many forms and still allow a relatively close cutting of the grass by means of robotic lawn mower 100 performing the arcuate movement according to the above.

According to some aspects, the object can be in the form of the lawn edge 139. According to some aspects, the object can be detected by any one of the environment detection device 171, 172 and/or the navigation sensor arrangement 175 that may comprise a satellite navigation sensor, alone or in any suitable combination. This means that for example a lawn edge 139 can be detected both by means of a wire sensor 173, an environment detection device 171, 172 and/or a navigation sensor arrangement 175, alone or in combination.

According to some aspects, the cutting arc 310 has an angular extension that exceeds 180º, where the control unit 110 is adapted to control the robotic lawn mower 100e to continue moving when a second end center 106, according to some aspects constituting a rearmost point of the robotic lawn mower, that has followed the extension of the cutting arc 310 has reached an end 212 of the cutting arc 310. This means that the robotic lawn mower 100e will continue moving at an angle to the original angle of approach, away from the boundary 810, 320. This in turn enables the robotic lawn mower 100 to repeat the above procedure, performing arcuate movements, such that a continuous grass edge close to the boundary 810, 320 is cut. This can be performed in combination with cutting the rest of the grass on the lawn. In this context, the second end center 106 is a central point at the second end 102 along its extension.

The present disclosure is not limited to the above, but may vary freely within the scope of the appended claims. For example, the end portions 101, 102 are shown as arcuate portions facing a forward travelling direction F or rearward travelling direction R where, according to some aspects, a first protective walls wall part 231 constitutes the second end portion 102. According to some aspects, an end portion 101, 102 can be defined as a rearmost of foremost point at the robotic lawn mower 100. According to some aspects, the first end portion 101 is opposite the second end portion 102, each end portion facing a travelling direction F, R.

According to some aspects, the first rotation plane 180 runs parallel to the ground plane G and the second rotation plane 227 runs perpendicular to the first rotation plane 180. According to some aspects, the ground plane G is an imaginary plane that reaches all wheels 130a, 130b, 131a, 131b while being positioned as far from the rest of the robotic lawn mower 100 as possible.

## Claims

1. A robotic lawn mower (100) comprising a first end portion (101) facing a forward travelling direction (F) and a second end portion (102) facing a reverse travelling direction (R), the robotic lawn mower (100) further comprising a body (140), at least two drive wheels (130a, 130b), at least one swivelable wheel (131a, 131b), a control unit (110) adapted to control the operation of the robotic lawn mower (100), and a first rotatable grass cutting device (180) having a first rotation axis (181) and a first rotation plane (182), the wheels (130a, 130b; 131a, 131b) at least partly being adapted to run on a ground surface (G) and where at least two drive wheels (130a, 130b) have a drive wheel axis (145) with a center (146) and are drivably connected to a propulsion motor arrangement (150), where the robotic lawn mower (100) comprises a longitudinal extension (210) that extends along a straight travelling direction (F, R) for the robotic lawn mower (100), wherein the robotic lawn mower (100) comprises a second rotatable grass cutting device (220) having a second rotation axis (221), **characterized in that** the second rotatable grass cutting device (220) has a second rotation plane (227) that presents a smallest first angle (α) to the longitudinal extension (210) that exceeds 45°.

2. The robotic lawn mower (100) according to claim 1, wherein the second rotation axis (221) extends at a smallest second angle (β) to the longitudinal extension (210) that falls below 45°

3. The robotic lawn mower (100) according to any one of the claims 1 or 2, wherein the robotic lawn mower (100) comprises a first mower motor (241) that is adapted to propel the first rotatable grass cutting device (180) and a second mower motor (226) that is adapted to propel the second rotatable grass cutting device (220).

4. The robotic lawn mower (100) according to any one of the previous claims, wherein the second rotatable grass cutting device (220) comprises a plurality of holding arms (222a, 222b) extending along the second rotation plane (227) from the second rotation axis (221) to a respective end where a respective cutting knife (223, 224) is attached.

5. The robotic lawn mower (100) according to claim 4, wherein the holding arms (222a, 222b) and the cutting knives (223, 224) are formed as one integral part.

6. The robotic lawn mower (100) according to any one of the claims 1-3, wherein the second rotatable grass cutting device (220') comprises a second cutting disk (228) having a periphery (229) at which at least two cutting knives (223, 224) are attached.

7. The robotic lawn mower (100) according to claim 4 or 6, wherein the cutting knives (223, 224) are formed as releasable and exchangeable parts.

8. The robotic lawn mower (100) according to claim 7, wherein the cutting knives (223, 224) are formed in a plastic material, each cutting knife (223, 224) having a keyhole-shaped aperture (254, 255) and where the holding arms (222a, 222b) or the second cutting disk (228) comprises at least two holding rods (251, 253) with an outer wider portion (250, 252), each holding rod (251, 253) being adapted to receive a corresponding keyhole-shaped aperture (254, 255).

9. The robotic lawn mower (100) according to claim 7, wherein the cutting knives (223, 224) are formed in a plastic material, each cutting knife (223, 224) having a wider part (223a, 224a) and where the holding arms (222a, 222b) or the second cutting disk (228) comprises at least two holding frames (256, 257) with corresponding apertures (258), each holding frame (256, 257) being adapted to receive and hold a corresponding cutting knife (223, 224) where a largest width of the wider part (223a, 224a) exceeds a largest width of the aperture (258).

10. The robotic lawn mower (100) according to any one of the previous claims, wherein the second rotatable grass cutting device (220) is positioned closer to the second end portion (102) than the first end portion (101) and faces the second end portion (102), where the smallest first angle (α) falls below 90° such that when a cutting knife (224) during rotation of the second rotatable grass cutting device (220) comes closest to the ground surface (G), that cutting knife (224) also comes closer to the second end portion (102) than any other cutting knife (223).

11. The robotic lawn mower (100) according to any one of the previous claims, wherein the robotic lawn mower (100) comprises a safety arrangement (230) that in turn comprises a plurality of protective wall parts (231, 232, 233, 234) extending mainly perpendicular to the longitudinal extension (210) and being mutually separated by gaps (g) along the longitudinal extension (210), the safety arrangement (230) being positioned between the second rotatable grass cutting device (220) and the ground surface (G) such that when a cutting knife (224) during rotation of the second rotatable grass cutting device (220) comes closest to a ground surface (G), the safety arrangement (230) is positioned between that cutting knife (224) and the ground surface (G).

12. The robotic lawn mower (100) according to claim 11, wherein the protective wall parts (231, 232, 233, 234) at least mainly have an arcuate shape with a common center (146).

13. The robotic lawn mower (100) according to claim 12, wherein the common center (146) is the center of the drive wheel axis (145).

14. The robotic lawn mower (100) according to any one of the previous claims, wherein the control unit (110) is adapted to
control the robotic lawn mower (100a) to move towards a boundary (810, 320) such that the first end portion (101) approaches the boundary (810, 320);
determine if a distance to the boundary (810, 320) fulfills a condition; and when the control unit (110) determines that a distance to the boundary (810, 320) fulfills a condition, the control unit (110) is adapted to
stop the robotic lawn mower (100b); and to
control the drive wheels (130a, 130b) to turn in mutually different directions such that the second end portion (102) of the robotic lawn mower (100c, 100d) performs an arcuate movement along a cutting arc (310), enabling the second rotatable grass cutting device (220) to cut grass within the cutting arc (310).

15. The robotic lawn mower (100) according to claim 14, wherein the center of the cutting arc (310) is positioned along the drive wheel axis (145).

## Patentansprüche

1. Robotischer Rasenmäher (100), umfassend einen ersten Endabschnitt (101), der einer Vorwärtsfahrtrichtung (F) zugewandt ist, und einen zweiten Endabschnitt (102), der einer Rückwärtsfahrtrichtung (R) zugewandt ist, wobei der robotische Rasenmäher (100) ferner einen Körper (140), mindestens zwei Antriebsräder (130a, 130b), mindestens ein schwenkbares Rad (131a, 131b), eine Steuereinheit (110), die angepasst ist, um den Betrieb des robotischen Rasenmähers (100) zu steuern, und eine erste drehbare Grasschneidvorrichtung (180), die eine erste Drehachse (181) und eine erste Drehebene (182) aufweist, umfasst, wobei die Räder (130a, 130b; 131a, 131b) mindestens teilweise zum Fahren auf einer Bodenfläche (G) ausgebildet sind und wobei mindestens zwei Antriebsräder (130a, 130b) eine Antriebsradachse (145) mit einem Zentrum (146) aufweisen und mit einer Antriebsmotoranordnung (150) antreibbar verbunden sind, wobei der Roboterrasenmäher (100) eine Längserstreckung (210) umfasst, die sich entlang einer geraden Fahrtrichtung (F, R) für den Roboterrasenmäher (100) erstreckt, wobei der Roboterrasenmäher (100) eine zweite drehbare Grasschneidvorrichtung (220), die eine zweite Rotationsachse (221) aufweist, umfasst, **dadurch gekennzeichnet, dass** die zweite drehbare Grasschneidvorrichtung (220) eine zweite Rotationsebene (227) aufweist, die einen kleinsten ersten Winkel (α) zu der Längserstreckung (210) aufweist, der 45° überschreitet.

2. Robotischer Rasenmäher (100) nach Anspruch 1, wobei sich die zweite Drehachse (221) in einem kleinsten zweiten Winkel (β) zur Längserstreckung (210) erstreckt, der unter 45° liegt.

3. Robotischer Rasenmäher (100) nach einem der Ansprüche 1 oder 2, wobei der robotische Rasenmäher (100) einen ersten Mähermotor (241), der angepasst ist, um die erste drehbare Grasschneidvorrichtung (180) anzutreiben, und einen zweiten Mähermotor (226), der angepasst ist, um die zweite drehbare Grasschneidvorrichtung (220) anzutreiben, umfasst.

4. Robotischer Rasenmäher (100) nach einem der vorstehenden Ansprüche, wobei die zweite drehbare Grasschneidvorrichtung (220) eine Vielzahl von Haltearmen (222a, 222b) umfasst, die sich entlang der zweiten Drehebene (227) von der zweiten Drehachse (221) zu einem jeweiligen Ende erstrecken, an dem ein jeweiliges Schneidmesser (223, 224) angebracht ist.

5. Robotischer Rasenmäher (100) nach Anspruch 4, wobei die Haltearme (222a, 222b) und die Schneidmesser (223, 224) als ein integrales Teil ausgebildet sind.

6. Robotischer Rasenmäher (100) nach einem der Ansprüche 1 bis 3, wobei die zweite drehbare Grasschneidvorrichtung (220') eine zweite Schneidscheibe (228) die einen Umfang (229) aufweist, an dem mindestens zwei Schneidmesser (223, 224) angebracht sind, umfasst.

7. Robotischer Rasenmäher (100) nach Anspruch 4 oder 6, wobei die Schneidmesser (223, 224) als lösbare und austauschbare Teile ausgebildet sind.

8. Robotischer Rasenmäher (100) nach Anspruch 7, wobei die Schneidmesser (223, 224) aus einem Kunststoffmaterial ausgebildet sind, wobei jedes Schneidmesser (223, 224) eine schlüssellochförmige Öffnung (254, 255) aufweist und wobei die Haltearme (222a, 222b) oder die zweite Schneidscheibe (228) mindestens zwei Haltestangen (251, 253) mit einem äußeren breiteren Abschnitt (250, 252) umfassen, wobei jede Haltestange (251, 253) angepasst ist, um eine entsprechende schlüssellochförmige Öffnung (254, 255) aufzunehmen.

9. Robotischer Rasenmäher (100) nach Anspruch 7, wobei die Schneidmesser (223, 224) aus einem Kunststoffmaterial ausgebildet sind, wobei jedes Schneidmesser (223, 224) einen breiteren Teil (223a, 224a) aufweist und wobei die Haltearme (222a, 222b) oder die zweite Schneidscheibe (228) mindestens zwei Halterahmen (256, 257) mit entsprechenden Öffnungen (258) umfassen, wobei jeder Halterahmen (256, 257) angepasst ist, um ein entsprechendes Schneidmesser (223, 224) aufzunehmen und zu halten, wenn eine größte Breite des breiteren Teils (223a, 224a) eine größte Breite der Öffnung (258) übersteigt.

10. Robotischer Rasenmäher (100) nach einem der vorstehenden Ansprüche, wobei die zweite drehbare Grasschneidvorrichtung (220) näher an dem zweiten Endabschnitt (102) als an dem ersten Endabschnitt (101) positioniert ist und dem zweiten Endabschnitt (102) zugewandt ist, wobei der kleinste erste Winkel (α) unter 90° fällt, so dass, wenn ein Schneidmesser (224) während der Drehung der zweiten drehbaren Grasschneidvorrichtung (220) der Bodenoberfläche (G) am nächsten kommt, dieses Schneidmesser (224) auch näher an den zweiten Endabschnitt (102) kommt als jedes andere Schneidmesser (223).

11. Robotischer Rasenmäher (100) nach einem der vorstehenden Ansprüche, wobei der robotische Rasenmäher (100) eine Sicherheitsanordnung (230) umfasst, die wiederum eine Vielzahl von Schutzwandteilen (231, 232, 233, 234) umfasst, die sich hauptsächlich senkrecht zu der Längserstreckung (210) erstrecken und durch Lücken (g) entlang der Längserstreckung (210) voneinander getrennt sind, wobei die Sicherheitsanordnung (230) zwischen der zweiten drehbaren Grasschneidvorrichtung (220) und der Bodenoberfläche (G) derart angeordnet ist, dass, wenn ein Schneidmesser (224) während der Drehung der zweiten drehbaren Grasschneidvorrichtung (220) einer Bodenoberfläche (G) am nächsten kommt, die Sicherheitsanordnung (230) zwischen diesem Schneidmesser (224) und der Bodenoberfläche (G) angeordnet ist.

12. Robotischer Rasenmäher (100) nach Anspruch 11, wobei die Schutzwandteile (231, 232, 233, 234) mindestens größtenteils eine bogenförmige Form mit einem gemeinsamen Zentrum (146) aufweisen.

13. Robotischer Rasenmäher (100) nach Anspruch 12, wobei das gemeinsame Zentrum (146) das Zentrum der Antriebsradachse (145) ist.

14. Robotischer Rasenmäher (100) nach einem der vorstehenden Ansprüche, wobei die Steuereinheit (110) angepasst ist zum
Steuern des robotischen Rasenmähers (100a), dass er sich zu einer Begrenzung (810, 320) bewegt, so dass sich der erste Endabschnitt (101) der Begrenzung (810, 320) nähert;
Bestimmen, ob ein Abstand zu der Begrenzung (810, 320) eine Bedingung erfüllt; und wenn die Steuereinheit (110) feststellt, dass ein Abstand zur Begrenzung (810, 320) eine Bedingung erfüllt, ist die Steuereinheit (110) angepasst zum
Stoppen des robotischen Rasenmähers (100b); und zum
Steuern der Antriebsräder (130a, 130b), so dass sie sich in voneinander verschiedene Richtungen drehen, so dass der zweite Endabschnitt (102) des robotischen Rasenmähers (100c, 100d) eine bogenförmige Bewegung entlang eines Schneidbogens (310) ausführt, wodurch die zweite drehbare Grasschneidscheibe (220) Gras innerhalb des Schneidbogens (310) schneiden kann.

15. Robotischer Rasenmäher (100) nach Anspruch 14, wobei das Zentrum des Schneidbogens (310) entlang der Antriebsradachse (145) positioniert ist.

## Revendications

1. Tondeuse à gazon robotique (100) comprenant une première partie d'extrémité (101) faisant face à une direction de déplacement vers l'avant (F) et une seconde partie d'extrémité (102) faisant face à une direction de déplacement vers l'arrière (R), la tondeuse à gazon robotique (100) comprenant en outre un corps (140), au moins deux roues motrices (130a, 130b), au moins une roue pivotante (131a, 131b), une unité de commande (110) configurée pour commander le fonctionnement de la tondeuse à gazon robotique (100), et un premier dispositif de tonte de pelouse rotatif (180) ayant un premier axe de rotation (181) et un premier plan de rotation (182), les roues (130a, 130b ; 131a, 131b) étant au moins partiellement conçues pour rouler sur une surface au sol (G) et où au moins deux roues motrices (130a, 130b) ont un axe de roue motrice (145) avec un centre (146) et sont reliées de manière entraînable à un agencement de moteur à propulsion (150), où la tondeuse à gazon robotique (100) comprend une extension longitudinale (210) qui s'étend le long d'une direction de déplacement (F, R) rectiligne pour la tondeuse à gazon robotique (100), dans laquelle la tondeuse à gazon robotique (100) comprend un second dispositif de tonte de pelouse rotatif (220) ayant un second axe de rotation (221), **caractérisée en ce que** le second dispositif de tonte de pelouse rotatif (220) a un second plan de rotation (227) qui présente un premier angle (α) le plus petit par rapport à l'extension longitudinale (210) qui dépasse 45°.

2. Tondeuse à gazon robotique (100) selon la revendication 1, dans laquelle le second axe de rotation (221) s'étend selon un second angle (β) le plus petit par rapport à l'extension longitudinale (210) qui tombe en dessous de 45°.

3. Tondeuse à gazon robotique (100) selon l'une quelconque des revendications 1 ou 2, dans laquelle la tondeuse à gazon robotique (100) comprend un premier moteur de tondeuse (241) qui est conçu pour propulser le premier dispositif de tonte de pelouse rotatif (180) et un second moteur de tondeuse (226) qui est conçu pour propulser le second dispositif de tonte de pelouse rotatif (220).

4. Tondeuse à gazon robotique (100) selon l'une quelconque des revendications précédentes, dans laquelle le second dispositif de tonte de pelouse rotatif (220) comprend une pluralité de bras de maintien (222a, 222b) s'étendant le long du second plan de rotation (227) depuis le second axe de rotation (221) jusqu'à une extrémité respective où un couteau de tonte (223, 224) respectif est fixé.

5. Tondeuse à gazon robotique (100) selon la revendication 4, dans laquelle les bras de maintien (222a, 222b) et les couteaux de tonte (223, 224) forment une seule partie intégrante.

6. Tondeuse à gazon robotique (100) selon l'une quelconque des revendications 1 à 3, dans laquelle le second dispositif de tonte de pelouse rotatif (220') comprend un second disque de tonte (228) ayant une périphérie (229) au niveau de laquelle au moins deux couteaux de tonte (223, 224) sont fixées.

7. Tondeuse à gazon robotique (100) selon la revendication 4 ou 6, dans laquelle les couteaux de tonte (223, 224) sont formées en tant que parties libérables et échangeables.

8. Tondeuse à gazon robotique (100) selon la revendication 7, dans laquelle les couteaux de tonte (223, 224) sont formées en une matière plastique, chaque couteau de tonte (223, 224) ayant une ouverture en forme de trou de serrure (254, 255) et où les bras de maintien (222a, 222b) ou le second disque de tonte (228) comprennent au moins deux tiges de maintien (251, 253) avec une partie externe plus large (250, 252), chaque tige de maintien (251, 253) étant conçue pour recevoir une ouverture en forme de trou de serrure (254, 255) correspondante.

9. Tondeuse à gazon robotique (100) selon la revendication 7, dans laquelle les couteaux de tonte (223, 224) sont formés en matière plastique, chaque couteau de tonte (223, 224) ayant une partie plus large (223a, 224a) et où les bras de maintien (222a, 222b) ou le second disque de tonte (228) comprennent au moins deux cadres de maintien (256, 257) avec des ouvertures (258) correspondantes, chaque cadre de maintien (256, 257) étant conçu pour recevoir et maintenir un couteau de tonte (223, 224) correspondant là où une plus grande largeur de la partie plus large (223a, 224a) dépasse une plus grande largeur de l'ouverture (258).

10. Tondeuse à gazon robotique (100) selon l'une quelconque des revendications précédentes, dans laquelle le second dispositif de tonte de pelouse rotatif (220) est positionné plus près de la seconde partie d'extrémité (102) que la première partie d'extrémité (101) et fait face à la seconde partie d'extrémité (102), où le plus petit premier angle (α) tombe en dessous de 90° de telle sorte que lorsqu'un couteau de tonte (224), pendant la rotation du second dispositif de tonte de pelouse rotatif (220), s'approche le plus de la surface au sol (G), ce couteau de tonte (224) s'approche également le plus de la seconde partie d'extrémité (102) que tout autre couteau de tonte (223).

11. Tondeuse à gazon robotique (100) selon l'une quelconque des revendications précédentes, dans laquelle la tondeuse à gazon robotique (100) comprend un agencement de sécurité (230) qui comprend à son tour une pluralité de parties parois de protection (231, 232, 233, 234) s'étendant principalement perpendiculairement à l'extension longitudinale (210) et étant mutuellement séparées par des espaces (g) le long de l'extension longitudinale (210), l'agencement de sécurité (230) étant positionné entre le second dispositif de tonte de pelouse rotatif (220) et la surface au sol (G) de telle sorte que lorsqu'un couteau de tonte (224), pendant la rotation du second dispositif de tonte de pelouse rotatif (220), s'approche le plus d'une surface au sol (G), l'agencement de sécurité (230) est positionné entre ce couteau de tonte (224) et la surface au sol (G).

12. Tondeuse à gazon robotique (100) selon la revendication 11, dans laquelle les parties parois de protection (231, 232, 233, 234) ont au moins principalement une forme arquée avec un centre (146) commun.

13. Tondeuse à gazon robotique (100) selon la revendication 12, dans laquelle le centre (146) commun est le centre de l'axe de roue motrice (145).

14. Tondeuse à gazon robotique (100) selon l'une quelconque des revendications précédentes, dans laquelle l'unité de commande (110) est configurée pour
commander la tondeuse à gazon robotique (100a) pour qu'elle se déplace vers une limite (810, 320) de telle sorte que la première partie d'extrémité (101) s'approche de la limite (810, 320) ;
déterminer si une distance jusqu'à la limite (810, 320) satisfait une condition ; et lorsque l'unité de commande (110) détermine qu'une distance jusqu'à la limite (810, 320) satisfait une condition, l'unité de commande (110) est configurée pour
arrêter la tondeuse à gazon robotique (100b) ; et pour
commander les roues motrices (130a, 130b) pour qu'elles tournent dans des directions mutuellement différentes de telle sorte que la seconde partie d'extrémité (102) de la tondeuse à gazon robotique (100c, 100d) réalise un déplacement en arc de cercle le long d'un arc de tonte (310), permettant au second dispositif de tonte de pelouse rotatif (220) de tondre la pelouse à l'intérieur de l'arc de tonte (310).

15. Tondeuse à gazon robotique (100) selon la revendication 14, dans laquelle le centre de l'arc de tonte (310) est positionné le long de l'axe de roue motrice (145).
